# EUROPEAN PATENT SPECIFICATION

(11) **EP 0 493 299 B1**
(45) Date of publication and mention of the grant of the patent: **02.05.1997**
(21) Application number: 91600013.6
(22) Date of filing: 17.12.1991
(51) Int. Cl.: A01G 25/02

(54) **Method of producing a drip irrigation pipe and a drip irrigation pipe**
Herstellungsverfahren eines Tropfbewässerungsrohres und ein Tropfbewässerungsrohr
Procédé de fabrication d'un tuyau d'irrigation par égouttements et un tuyau d'irrigation par égouttements

(30) Priority: 20.12.1990 GR 90100874
(43) Date of publication of application: 01.07.1992
(73) Proprietor: PLASTIKA KRITIS S.A., 71110 Iraklion (GR)
(72) Inventor: Lebidakis, Ioannis, GR-71110 Iraklion (GR)
(74) Representative: Schwabe - Sandmair - Marx

(56) References cited:
- WO-A-89/09539
- DE-A- 2 815 628
- DE-U- 7 605 580
- US-A- 4 817 875

## Description

The invention concerns a production method for a drip irrigation pipe as defined in claim 1 and a drip irrigation pipe as defined in claim 5.

The problem of drip irrigation has been faced either by inserting independent drippers in the water supply pipe or by attaching independent pressure reduction conduit to the main pipe. One of the problems in drip irrigation is that the water flow of the drippers along the pipe depends on the water pressure in the area of the dripper. The above pressure is not constant-either due to pressure drop or due to inclined installation (of the pipe), so water flow will vary along the pipe. On the other hand for uniform irrigation the water flow of the drippers should be constant.

A drip irrigation pipe is known from WO-A-8909539 comprises a pressure reduction channel being formed by using so-called print heads. These print heads are not able to fabricate continuous pressure reduction channels. They can only to emboss or impress the channel into the wall of the main pipe. Therefore, it is only possible to fabricate relatively short pressure-reduction conduits or channels, and thus short drip irrigation pipes.

As for the characteristics of the pressure reduction element itself they are the same as those described in EP-A-0 470 081 & WO-A-9011681.

It is the object of the present invention to provide a method for producing a drip irrigation pipe, which is for the fabrication of a continuous drip irrigation pipe including a continuous pressure reduction conduit. Furthermore, it is the object of the present invention to provide an improved drip irrigation pipe.

The first object is solved by the method according to claim 1 and the latter object is solved by the subject-matter of the independent product claim 5.

As the drip irrigation pipe of the invention includes a strangulation conduit having variable cross-sectional areas the size of which changes depending on the pressure difference between the interior of the strangulation conduit and the interior of the main pipe, it has larger cross-sectional area at the points with small pressure in the main pipe, and smaller cross-sectional area at the points with large pressure in the main pipe. As a result the water supply in the strangulation channel remains approximately constant and virtually independent from the pressure variations in the main pipe. In order to achieve this variable cross-sectional area, an opening has to be made at a sub-section between two successive diaphragms of the strangulation conduit. This sub-section of the conduit where the opening has to be made, can be in any position between water inlet and outlet openings.

After the opening has been made, a membrane has to be installed against the opening, which is sealed and supported in such a way that the water in the main pipe is prevented from entering the conduit through the opening. The one side of this membrane is pressed by the pressure of the main pipe while the other side by the pressure of the interior of the conduit. Hence the membrane is deformed in a way proportional to the difference between the two pressures. This deformation of the membrane changes the cross-sectional area inside the strangulation conduit at the point where the membrane is installed, varying the water supply and achieving regulation.

The method and the drip irrigation pipe according to the present invention will be better understood with reference to preferred embodiments which will now be described with the assistance of the enclosed drawings in which:
figure 1 shows a drip irrigation pipe in a lengthwise crosssectional view;
figure 2 shows a perspective view of a drip irrigation pipe which is partially covered;
figure 3 shows the main pipe according to figure 2 with a cover;
figure 4 shows a perspectiv, partially cut-out view of a further embodiment according to the present invention;
figure 5 shows a further embodiment according to the present invention; and
figure 6 shows a variation of the method according to the present invention to produce a drip irrigation pipe.

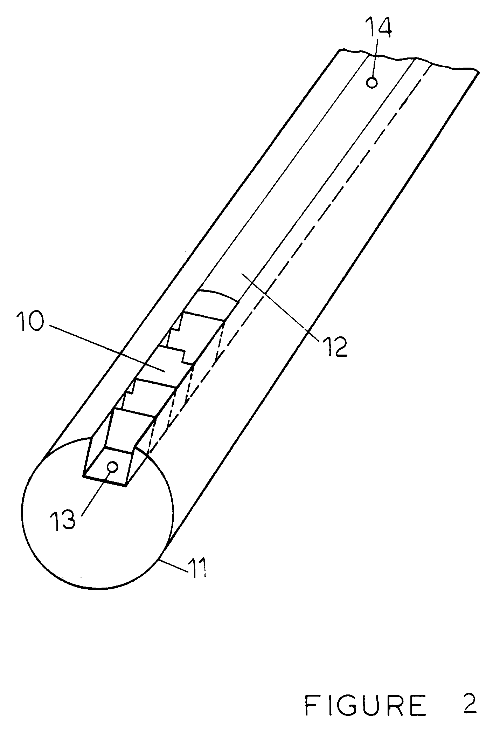

The above is explained better with respect to the accompanying drawings. In fig. 2 the main supply pipe 11 is shown whose outer surface has been shaped in such a way that the pressure reduction conduit 10 is uncovered while the drip irrigation pipe being fabricated. During production, the water inlet openings 13 are opened. Afterwards a plastic stripe 12 is welded over the open part of the conduit 10 forming its cover, and the water outlet openings 14 are opened.

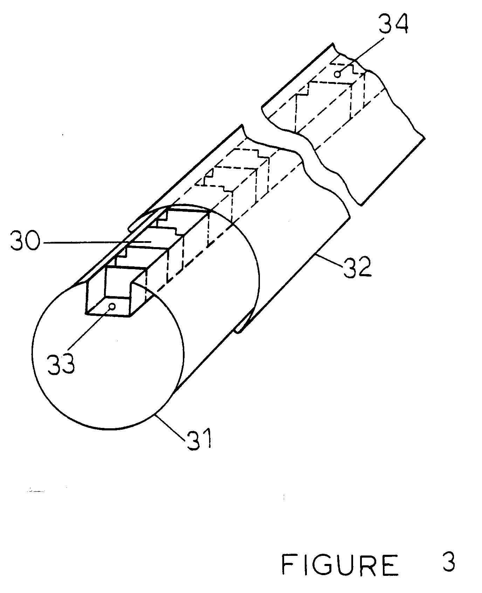

In fig. 3 a pipe 31 similar to the one shown in fig. 2 is shown, where again the pressure reduction conduit 30 - in the following called "special conduit" - without cover has been formed, and the water inlet openings 33 have been opened. In this case the whole pipe has been covered using a sheathing 32 which forms the cover of the conduit. Afterwards the water outlet openings 34 are opened.

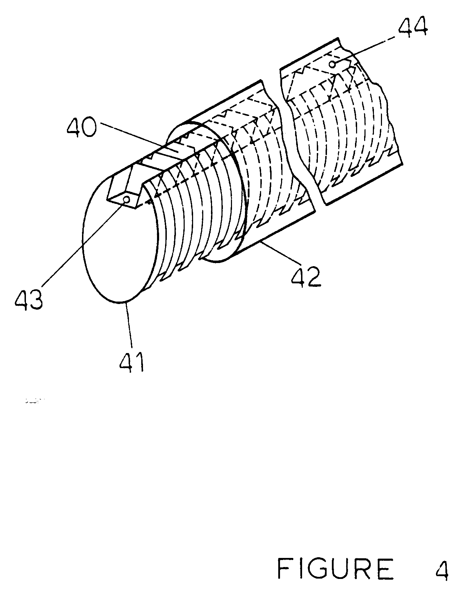

In fig. 4 a corrugated pipe 41 is shown, in which the special conduit 40 has been formed. The special conduit is covered using a sheathing 42, in the same way the plane pipe of fig 3 has been covered.

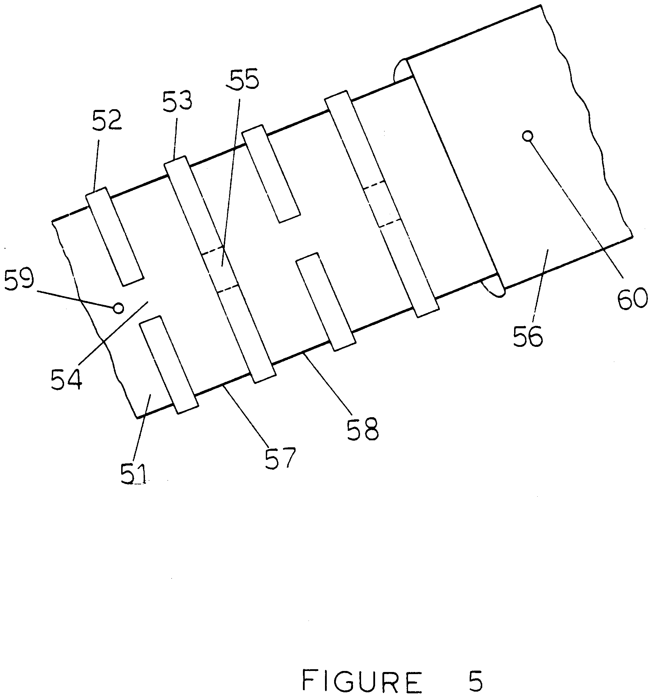

In fig. 5 a corrugated pipe 51 is shown in which a special conduit 54, 55 has been formed in such a way that it extends along the total outer surface of the corrugated pipe 51. The conduit consists of rings 52, 53 each of which has a slit 54, 55. The slits 54, 55 of successive rings 52, 53 are placed opposite or in any case they are not on a line parallel to the axis of the pipe. The pipe is again covered with sheathing 56. This way, the strangulation channel is formed, which has narrowings formed by the slits 54, 55 and widenings formed by the points between rings 57, 58. Prefered dimensions for this form of the pipe are of the order of 2 mm for the distances 57, 58 between the rings and of the order of 1.2 mm for the slits 54, 55 while the height of the ring is of the order of 2 mm.

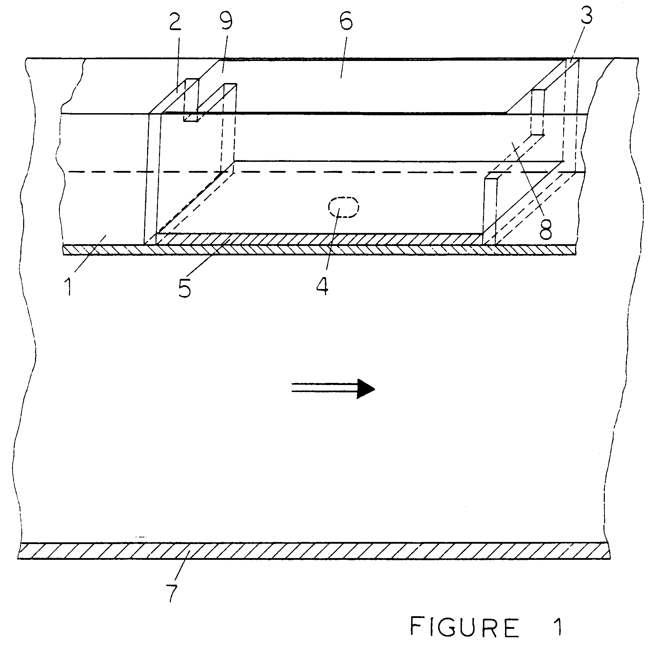

In fig. 1 a main water supply pipe 7 is shown where a continuous pressure reduction conduit 1 is installed. The figure shows only a small portion of the conduit 1 between two diaphragms 2, 3. As shown an opening 4 has been made at the bottom of the conduit portion 1 between diaphragms 2 and 3. Then a flexible membrane 5 is placed which covers the part of the conduit where the hole 4 has been opened, in such a way that one side of the membrane is pressed by the pressure in the special conduit, while its other side is pressed by the pressure inside the main pipe. This way the membrane is deformed in a way proportional to the difference among these two pressures. A part, having the form of a chamber 6 is placed on the membrane, achieving the sealing of the membrane circumferentially, on one hand, and, on the other hand, this chamber has a suitable shape in order to allow for the deformation of the membrane to influence drastically the water flow in the conduit.

In addition the chamber has openings 8 and 9 on its sides at suitable points in order to allow the water flow through the conduit.

As far as the construction is concerned, it is mentioned that the membrane exists on the market, while the chamber will be manufactured using an injection machine, while both will be installed in the conduit using special equipment.

Concerning the production method:
During the production of the main pipe using a special corrugator, its outer surface is shaped in such a way that one or more special conduits are formed. The other surface of the main pipe can be either plane or corrugated. Then, the forming of the drip irrigation pipe is completed either by covering the part where the special conduit(s) have been formed using a stripe, or by covering the whole pipe using a sheathing. In addition the water inlet and outlet openings can be at any point on the circumference of the pipe at the points defined by the beginning and the end of the section of the special conduit(s).

In addition, according to a new prefered embodiment, the special conduit can virtually extend along the whole external surface of the main pipe. This shape is consisted of rings each of which has a slit. The slits of successive rings are placed opposite its other or in such a way that they are not placed on a line parallel to the axis of the pipe.

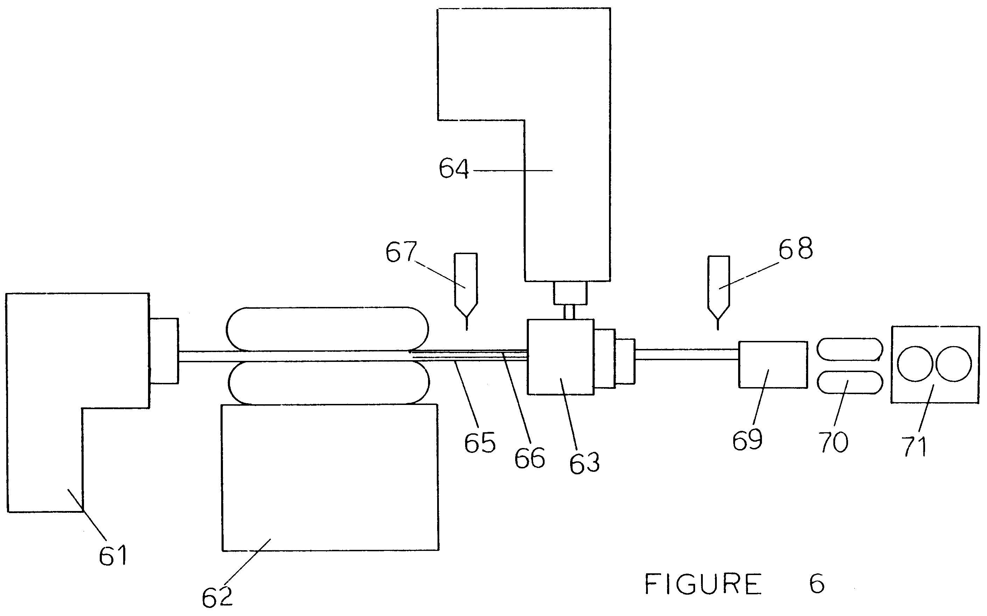

In fig. 6 a prefered arrangement of the production line of the pipe according to the present invention is shown. The line includes an extruder 61 which feeds a corrugator 62. In the corrugator a plane or a corrugated pipe 65 is produced on the surface of which one or more special conduits 66 are formed. During production the water inlet openings are opened either using a mechanism 67 or inside the corrugator 62. Then this pipe enters a die head 63 in the other inlet of which an extruder (64) is connected. In this die head the special conduit 66 is covered by a sheathing. In addition, the water outlet openings are opened using a special mechanism 68 in order for the complete drip irrigation pipe to be formed. Then the pipe is cooled in a water bath 69 while a haul-off unit 70 and a coiler 71 follow like in ordinary pipe production lines.

With this method the production process of the drip irrigation pipe with embodied continuous conduit is simplified.

## Claims

1. A production method for a drip irrigation pipe comprising the steps:
a) a pipe (65) is produced by means of an extruder (61);
b) after said pipe (65) is moved out of said extruder (61), it is supplied to a corrugator (62) which forms at least on a part of the outer surface of said pipe (65) one or more pressure reduction conduits (66);
c) the water inlet openings to a pressure reduction conduit are formed;
d) the pipe (65) enters a die head (63) to be at least partially covered with a cover (12; 32) over the pressure reduction conduit and said head (63) is hermetically connected to said extruder (64);
e) the water outlet openings being formed;
f) the pipe is directed to a cooling bath (69), a caterpillar haul-off (70) and a coiling device (71).

2. A production method according to claim 1, **characterized** by forming the water inlet openings inside the corrugator (62) by means of a special corrugator design.

3. A production method according to one of claims 1 and 2, **characterized** by covering only the special conduit inside the head (63).

4. A production method according to one of claims 1 to 3, characterized in that a flexible membran is placed in the pressure reduction conduit, said membrane being deformed in relation to the difference between the pressure inside the main pipe and the pressure inside the conduit ensuring constant water flow.

5. A drip irrigation pipe comprising
a) a main pipe (11; 31; 41; 51) for supplying water;
a1) a pressure reduction conduit (10; 30) including changes of the direction of the flow to achieve a pressure reduction;
a2) the main pipe (11; 31; 41; 51) has its surface shaped so that corrugations form one or more of said pressure reduction conduits (10; 30), which conduits have water inlet openings (13; 33; 59);
a3) said pressure reduction conduit includes in addition to or alternatively to the changes of the direction of the flow successive narrowings (8, 9) and widenings (6);
b) at least the surface of the main pipe including reduction conduits (13; 33) is covered by means of a cover (12; 32; 56) which has water outlet openings (14; 34; 60) connected to the pressure reduction conduits.

6. A drip irrigation pipe according to claim 5, **characterized** in that the cover is limited to a stripe of plastic (12) which covers only the pressure reduction conduits.

7. A pipe irrigation pipe according to claim 6, **characterized** in that said conduit (1) has an opening between two diaphragms (2, 3).

8. A drip irrigation pipe according to one of claims 5 to 7, **characterized** in that the opening (4) of the conduit (1) is covered by a flexible membrane (5) attached to an especially designed champer, which on the one hand makes the membrane (5) tight and on the other hand forms an appropriate cross-section to the water flow channel.

9. A drip irrigation pipe according to one of claims 5 and 6, **characterized** in that said pressure reduction conduit (1) is an independent element attached to the water supply pipe (7).

10. A drip irrigation pipe according to one of claims 5 to 8, **characterized** in that said main pipe (41) is corrugated.

11. A drip irrigation pipe according to one of claims 5 to 10 comprising the following features:
a) rings (52, 53) are provided in the main pipe (51), the rings having slits (54, 55);
b) said slits (54, 55) of successive rings (52, 53) are arranged opposite to each other.

12. A drip irrigation pipe according to claim 11, **characterized** in that said rings (52, 53) are equidistant or not equidistant.

13. A drip irrigation pipe according to one of claims 11 and 12, **characterized** in that said slits (54, 55) of successive rings (52, 53) are arranged in such a way that they are in a line not parallel to the axis of the pipe.

## Patentansprüche

1. Herstellungsverfahren für ein Tropfbewässerungsrohr, daß die Schritte aufweist:
a) ein Rohr (65) wird mittels eines Extruders (61) erzeugt;
b) nachdem das Rohr (65) aus dem Extruder (61) herausbewegt ist, wird es einem Korrugator (62) zugeführt, der zumindest auf einem Teil der äußeren Oberfläche des Rohres (65) eine oder mehrere Druckverringerungsleitungen (66) ausbildet;
c) die Wassereinlaßöffnungen zu einer Druckverringerungsleitung werden ausgebildet;
d) das Rohr (65) tritt in einen Düsenkopf (63) ein, um zumindest teilweise mit einer Abdeckung bzw. Umhüllung (12; 32) über der Druckverringerungsleitung abgedeckt zu werden, und der Kopf (63) ist hermetisch an den Extruder (64) angeschlossen;
e) die Wasserauslaßöffnungen werden ausgebildet;
f) das Rohr wird einem Kühlungsbad (69), einem Raupenabzug (70) und einer Aufspul- bzw. Aufwickeleinrichtung (71) zugeleitet.

2. Herstellungsverfahren nach Anspruch 1, dadurch **gekennzeichnet,** daß die Wassereinlaßöffnungen innerhalb des Korrugators (62) mittels eines gesonderten Korrugatoraufbaus ausgebildet werden.

3. Herstellungsverfahren nach einem der Ansprüche 1 und 2, dadurch **gekennzeichnet,** daß die gesonderte Leitung nur innerhalb des Kopfes (63) abgedeckt wird.

4. Herstellungsverfahren nach einem der Ansprüche 1 bis 3, dadurch **gekennzeichnet,** daß eine flexible Membran in der Druckverringerungsleitung angeordnet wird, wobei die Membran im Verhältnis zu der Differenz zwischen dem Druck innerhalb des Hauptrohres und dem Druck innerhalb der Leitung deformiert wird, wobei ein konstanter Wasserfluß sichergestellt wird.

5. Tropfbewässerungsrohr, das aufweist,
a) ein Hauptrohr (11; 41; 31; 51), um Wasser zuzuführen;
a1) eine Druckverringerungsleitung (10; 30), die Änderungen der Flußrichtung enthält, um eine Druckverringerung zu erzielen;
a2) die Oberfläche des Hauptrohres (11; 31) ist so geformt, daß Wellungen eine oder mehrere der Druckverringerungsleitungen (10; 30) bilden, wobei die Leitungen Wassereinlaßöffnungen (13; 33; 59) haben;
a3) die Druckverringerungsleitung enthält zusätzlich zu den Änderungen der Flußrichtung oder alternativ dazu aufeinanderfolgende Verengungen (8, 9) und Erweiterungen (6);
b) zumindest die Oberfläche des Hauptrohres, die die Verringerungsleitungen (13; 33) enthält, wird mittels einer Abdeckung bzw. Umhüllung (12; 32; 56) abgedeckt, die Wasserauslaßöffnungen (14; 34; 60) hat, die an die Druckverringerungsleitungen angeschlossen sind.

6. Tropfbewässerungsrohr nach Anspruch 5, dadurch **gekennzeichnet,** daß die Abdeckung bzw. Umhüllung auf einen Plastikstreifen (12) beschränkt ist, der nur die Druckverringerungsleitungen abdeckt.

7. Tropfbewässerungsrohr nach Anspruch 6, dadurch **gekennzeichnet,** daß die Leitung (1) eine Öffnung zwischen zwei Diaphragmen (2, 3) hat.

8. Tropfbewässerungsrohr nach einem der Ansprüche 5 bis 7, dadurch **gekenn-zeichnet,** daß die Öffnung (4) der Leitung (1) durch eine flexible Membran (5) abgedeckt ist, die an eine speziell konstruierte Auskehlung bzw. Verjüngung angesetzt ist, die einerseits die Membran (5) dichtet und andererseits für den Wasserflußkanal einen angemessenen Querschnitt bildet.

9. Tropfbewässerungsrohr nach einem der Ansprüche 5 und 6, dadurch **gekennzeichnet,** daß die Druckverringerungsleitung (1) ein unabhängiges Teil ist, das an das Wasserzuführrohr (7) angesetzt ist.

10. Tropfbewässerungsrohr nach einem der Ansprüche 5 bis 8, dadurch **gekennzeichnet,** daß das Hauptrohr (41) gewellt ist.

11. Tropfbewässerungsrohr nach einem der Ansprüche 5 bis 10, das die folgenden Merkmale aufweist:
a) in dem Hauptrohr (51) sind Ringe (52, 53) vorgesehen, wobei die Ringe Schlitze (54, 55) haben;
b) die Schlitze (54, 55) von aufeinanderfolgenden Ringen (52, 53) sind einander gegebenüber angeordnet.

12. Tropfbewässerungsrohr nach Anspruch 11, dadurch **gekennzeichnet,** daß die Ringe (52, 53) äquidistant oder nicht äquidistant sind.

13. Tropfbewässerungsrohr nach einem der Ansprüche 11 und 12, dadurch **gekennzeichnet,** daß die Schlitze (54, 55) von aufeinanderfolgenden Ringen (52, 53) in einer solchen Weise angeordnet sind, daß sie in einer Linie sind, die zu der Achse des Rohres nicht parallel ist.

## Revendications

1. Procédé de production de canalisations d'irrigation au goutte à goutte comprenant les étapes:
a) une canalisation (65) est produite au moyen d'une extrudeuse (61);
b) après que ladite canalisation (65) a été retirée de ladite extrudeuse (61), elle est introduite dans une machine à onduler (62) qui forme sur au moins une partie de la surface externe de ladite canalisation un ou plusieurs conduits de détente (66);
c) les ouvertures d'amenée d'eau connectées à un conduit de détente sont formées;
d) la canalisation (65) est introduite dans une tête de filière (63) pour être au moins partiellement couverte d'une couverture (12; 32) sur les conduits de détente et ladite tête de filière (63) est connectée hermétiquement à ladite extrudeuse (64);
e) les ouvertures d'amenée d'eau étant formées;
d) la canalisation est dirigée vers un bain de refroidissement (69), une chenille de tirage (70) et un dispositif de bobinage (71).

2. Procédé de production selon la revendication 1, caractérisé par la formation des ouvertures d'alimentation en eau à l'intérieur de la machine à onduler (62) au moyen d'un dispositif spécial de gaufrage.

3. Procédé de production selon l'une quelconque des revendications 1 et 2, caractérisé en ce que seul le conduit spécial est couvert dans la tête de filière (63).

4. Procédé de production selon l'une quelconque des revendications 1 à 3, caractérisé en ce qu'une membrane flexible est placée dans le conduit de détente, ladite membrane étant déformée en fonction de la différence entre la pression à l'intérieur de la canalisation principale et la pression à l'intérieur du conduit assurant un flux d'eau constant.

5. Canalisation d'irrigation au goutte à goutte comprenant:
a) une canalisation principale (41; 31; 51) pour l'amenée d'eau;
a1) un conduit de détente (10; 30) incluant les changements de la direction du flux pour obtenir une diminution de la pression;
a2) la surface de la canalisation principale (11; 31) étant déformée de sorte que des ondulations forment un ou deux desdits conduits de détente (10; 30), lesdits conduits comportant des ouvertures d'amenée d'eau (13; 33);
a3) lesdits conduits de détente comprenant en plus ou au lieu des changements de direction du flux des rétrécissements (8, 9) et des élargissements (6);
b) au moins la surface de la canalisation principale incluant les conduits de détente (13; 33) est couverte au moyen d'une couverture (12; 32; 56), qui comprend des ouvertures pour l'amenée d'eau (14; 34; 60) connectées au conduit de détente.

6. Canalisation d'irrigation au goutte à goutte selon la revendication 5, caractérisée en ce que la couverture est limitée à une bande de plastique (12) couvrant uniquement les conduits de détente.

7. Canalisation d'irrigation au goutte à goutte selon la revendication 6, caractérisée en ce que ledit conduit (1) comprend une ouverture entre les deux diaphragmes (2, 3).

8. Canalisation d'irrigation au goutte à goutte selon l'une quelconque des revendications 5 à 7, caractérisée en ce que l'ouverture (4) du conduit (1) est recouverte par une membrane flexible (5) attachée à une chambre spécialement conçue à cet effet qui, d'une part, rend la membrane (5) étanche et, d'autre part, forme une section transversale appropriée par rapport à la canalisation d'eau.

9. Canalisation d'irrigation au goutte à goutte selon l'une quelconque des revendications 5 et 6, caractérisée en ce que ledit conduit de détente (1) est un élément indépendant attaché à la canalisation d'amenée d'eau (7).

10. Canalisation d'irrigation au goutte à goutte selon l'une quelconque des revendications 5 à 8, caractérisée en ce que ladite canalisation principale (41) est ondulée.

11. Canalisation d'irrigation au goutte à goutte selon l'une quelconque des revendications 5 à 10 comprenant les caractéristiques suivantes:
a) des anneaux (52, 53) sont prévus dans la canalisation principale (51), lesdits anneaux comportant des découpures (54, 55);
b) lesdites découpures (54, 55) des anneaux successifs (52, 53) sont opposées l'une à l'autre.

12. Canalisation d'irrigation au goutte à goutte selon la revendication 11, caractérisée en ce que lesdits anneaux (52, 53) sont équidistants ou ne le sont pas.

13. Une canalisation d'irrigation au goutte à goutte selon l'une quelconque des revendications 11 et 12, caractérisée en ce que lesdites découpures (54, 55) des anneaux successifs (52, 53) sont agencées de telle sorte qu'elles ne sont pas alignées parallèlement à l'axe de la canalisation.
